# NEUE EUROPÄISCHE PATENTSCHRIFT

(11) **EP 3 790 789 B2**
(45) Veröffentlichungstag und Bekanntmachung des Hinweises auf die Entscheidung über den Einspruch: **13.05.2026**
(45) Hinweis auf die Patenterteilung: 06.10.2021
(21) Anmeldenummer: 19711521.5
(22) Anmeldetag: 07.03.2019
(51) Int. Cl.: B62M 11/14, F16H 3/72

(54) **ANTRIEBSSYSTEM**
DRIVE SYSTEM
SYSTÈME D'ENTRAÎNEMENT

(43) Veröffentlichungstag der Anmeldung: 17.03.2021
(73) Patentinhaber: Brose Antriebstechnik GmbH & Co. Kommanditgesellschaft, Berlin, 10553 Berlin (DE)
(72) Erfinder: TENBERGE, Peter, 44797 Bochum (DE); JORDAN, Mick, 44869 Bochum (DE)
(74) Vertreter: Maikowski & Ninnemann Patentanwälte Partnerschaft mbB
(86) Internationale Anmeldenummer: PCT/EP2019/055734
(87) Internationale Veröffentlichungsnummer: WO 2019/175022

(56) Entgegenhaltungen:
- WO-A1-2016/034574
- DE-A1- 102017 200 611
- US-A1- 2017 259 883

## Beschreibung

Die vorgeschlagene Lösung betrifft ein Antriebssystem in einem Getriebegehäuse zwischen einer Antriebswelle und einer Abtriebswelle, die über ein mehrstufiges Überlagerungsgetriebe mit einer ersten Rotorwelle eines ersten elektrischen oder hydraulischen Motors und mit einer zweiten Rotorwelle eines zweiten elektrischen oder hydraulischen Motors verbunden sind, wobei die beiden Motoren über eine Leistungssteuerung zu einem stufenlosen Stellgetriebe verkoppelt sind und mit einer Batterie oder einem Druckspeicher als Energiespeicher verbunden sind und wobei das mehrstufige Überlagerungsgetriebe mindestens eine dreiwellige Planetenradstufe mit einem Sonnenrad, einem Hohlrad und einem Planetenträger mit mehreren Planetenrädern aufweist.

Ein Antriebssystem nach dem Oberbegriff des Anspruchs 1 ist aus WO 2016 034574 A1 bekannt.

Ein Antriebssystem ist hierbei aus der DE 199 25 229 A1 bekannt. In Fig. 1 dieser Schrift sind eine Antriebswelle 127 und eine Abtriebswelle 114 über ein mehrstufiges Überlagerungsgetriebe gekoppelt, welches eine dreiwellige Planetenradstufe 120 mit einem Sonnenrad 121, einem Hohlrad 122 und einem Planetenträger 124 mit mehreren Planetenrädern 123 aufweist. Die Abtriebswelle 114 ist mit dem Hohlrad 122 mittels eines mehrstufigen Teilgetriebes mit konstanter Übersetzung verbunden. Die Antriebswelle 127 ist mit dem Planetenträger 124 verbunden. Die erste Rotorwelle 132 eines ersten Motors, der hier ein Elektromotor ist, ist mit dem Sonnenrad 121 verbunden und die zweite Rotorwelle eines zweiten Motors, der hier ebenfalls ein Elektromotor ist, ist wie die Abtriebswelle 114 mit dem Hohlrad 122 verbunden. Beide Motoren sind über eine Leistungssteuerung zu einem stufenlosen Stellgetriebe verkoppelt und stehen hier mit einer Batterie als Energiespeicher in Verbindung. Durch stufenlose Veränderung der Übersetzung im Stellgetriebe ergibt sich auch eine stufenlose Veränderung des Verhältnisses von Antriebsdrehzahl zur Abtriebsdrehzahl. Durch eine geschickte Auslegung so eines Antriebssystems fließt nur ein kleiner Teil der Antriebsleistung über das Stellgetriebe mit eher geringem Wirkungsgrad und der Gesamtwirkungsgrad des Antriebssystems steigt.

Antriebssysteme dieser Art mit einem elektrischen oder hydraulischen Motor, der mit der Abtriebswelle in Verbindung steht, werden im Stand der Technik auch als Koppelgetriebe mit abtriebsseitiger Leistungsverzweigung beschrieben. Im Gegensatz dazu werden Antriebssysteme dieser Art mit einem elektrischen oder hydraulischen Motor, der mit der Antriebswelle in Verbindung steht, auch als Koppelgetriebe mit antriebsseitiger Leistungsverzweigung beschrieben.

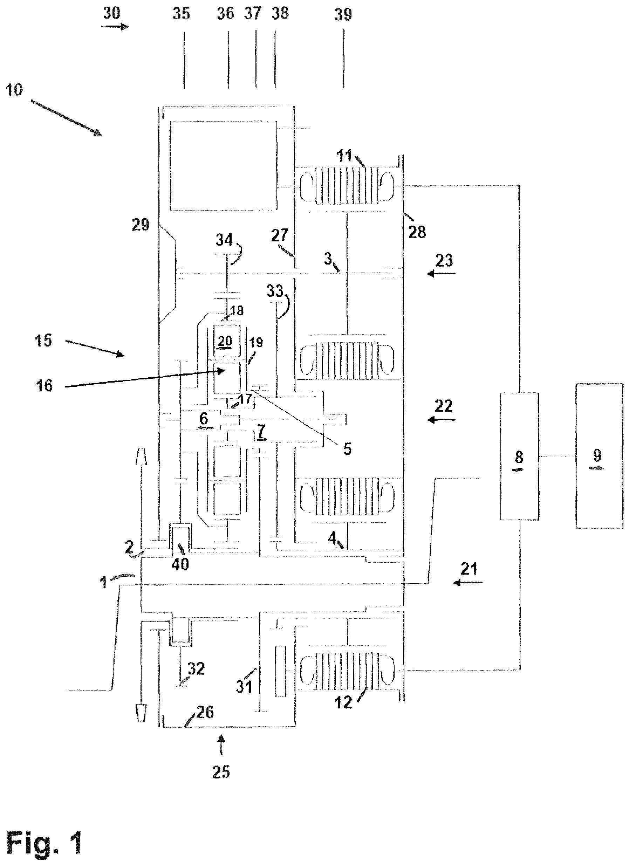

Die DE 31 47 447 A1 beschreibt so ein Antriebssystem mit antriebsseitiger Leistungsverzweigung. In Fig. 1 dieser Schrift sind eine Antriebswelle 1 und eine Abtriebswelle 2 über ein mehrstufiges Überlagerungsgetriebe mit der ersten Rotorwelle eines ersten hydraulischen Motors a und mit der zweiten Rotorwelle eines zweiten hydraulischen Motors b verbunden. Die beiden hydraulischen Motoren a und b sind über eine nicht in dieser Fig. 1 dargestellte, aber einer aus dem Stand der Technik bekannten Leistungssteuerung zu einem stufenlosen Stellgetriebe verkoppelt, das auch nach dem Stand der Technik an einen Druckspeicher als Energiespeicher angebunden sein kann. Das mehrstufige Überlagerungsgetriebe beinhaltet auch in dieser Schrift eine Planetenradstufe I mit einem Sonnenrad 1', einem Hohlrad 2' und einem Planetenträger s mit mehreren Planentenrädern p'. Der Planetenträger s ist über mehrere schaltbare Getriebestufen mit der Abtriebswelle 2 verbindbar. Das mehrstufige Überlagerungsgetriebe beinhaltet auch eine weitere Planetenradstufe II mit einem Sonnenrad 1", einem Hohlrad 2" und einem Planetenträger s' mit mehreren Planentenrädern p". Das Hohlrad 2" ist über weitere schaltbare Getriebestufen ebenfalls mit der Abtriebswelle 2 verbindbar. Die Antriebswelle 1 ist über eine Getriebestufe mit dem ersten hydraulischen Motor a und mit dem Hohlrad 2' und dem Planetenträger s' verbunden. Antriebssysteme nach dieser Schrift werden in Antrieben von Baumaschinen und Ackerschleppern verwendet.

Das Antriebssystem nach der DE 31 47 447 A1 ist wesentlich komplexer als das Antriebssystem nach der DE 199 25 229 A1. Der Grund dafür ist, dass die vielen schaltbaren Gänge eine Auslegung ermöglichen, bei der der Leistungsanteil, der über das stufenlose Stellgetriebe fließt, mit zunehmender Ganganzahl kleiner wird. Dadurch kommt so ein Antriebssystem auch bei sehr großen An- und Abtriebsdrehmomenten mit kleinen Motoren im Stellgetriebe aus.

Ein Antriebssystem mit elektrischen Motoren ist schon aus der US 5,151,321 A von 1924 als "Electromagnetic Transmission Mechanism" bekannt. Das Antriebssystem befindet sich nach Fig. 1 dieser Schrift in einem Gehäuse 84 und liegt zwischen einer Antriebswelle 10, die mit einem Antriebsflansch 11 verbunden ist, und einer Abtriebswelle 12. Die Antriebswelle 10 und die Abtriebswelle 12 sind über ein mehrstufiges Überlagerungsgetriebe mit einer ersten Rotorwelle 47 eines ersten Elektromotors 20 und mit einer zweiten Rotorwelle 44 eines zweiten Elektromotors 25 verbunden. Die erste Rotorwelle 47 ist fest mit der Antriebswelle 10 verbunden, es handelt sich hier also um eine antriebsseitige Leistungsverzweigung.

Das mehrstufige Überlagerungsgetriebe besteht aus zwei gekoppelten Planetenrad- stufen, mit je einem Sonnenrad, einem Hohlrad und einem Planetenträger, wobei die Planetenträger fest miteinander verbunden sind und einige Planetenräder zu sogenannten Stufenplaneten verkoppelt sind. Die Antriebswelle 10 ist mit dem Sonnenrad 53 der ersten Planetenradstufe verbunden. Die Abtriebswelle 12 ist mit dem Hohlrad dieser Planetenradstufe verbunden. Der zweite Elektromotor 25 wirkt über das Sonnenrad 62 der zweiten Planetenradstufe auf den gemeinsamen Planetenträger.

Auch in der US 3,623,568 A ist ein Antriebssystem mit zwei elektrischen Motoren beschrieben. In Fig. 1 dieser Schrift ist die Antriebswelle 10 mit dem Planetenträger 20 einer Planetenradstufe des Überlagerungssystems verbunden, ein erster elektrischer Motor 15 ist mit dem Hohlrad 22 verbunden und ein zweiter elektrischer Motor 12 wirkt zwischen dem Sonnenrad 21 und dem Hohlrad 22. Die Abtriebswelle 11 ist auch mit dem Hohlrad 22 verbunden. Dieses Antriebssystem hat auch zwei Drehzahlsensoren. Ein erster Drehzahlsensor 30 misst die Drehzahl der Antriebswelle 10, die gleich der Drehzahl des Planetenträgers 20 ist. Ein zweiter Drehzahlsensor 31 misst die Drehzahl der Abtriebswelle 11, die gleich der Drehzahl des Hohlrades 22 ist. Über die kinematische Grundbeziehung dreiwelliger Planetenradstufen liegt damit auch die Drehzahl des Sonnenrades fest. Nach dem Stand der Technik detektieren solche Drehzahlsensoren auch pro Umdrehung mindestens einen Referenzwinkel, sodass sich mit diesen Referenzwinkeln und den integrierten Drehzahlsignalen die genauen Winkelpositionen der übrigen Wellen in Antriebssystem ergeben. Dies ist für die genaue Steuerung der Phasenströme in den beiden Elektromotoren wichtig. Aus den zeitlichen Ableitungen der Drehzahlsignale ergeben sich dann die Drehbeschleunigungen im System als Reaktionen auf die äußeren Drehmomente.

Ein Antriebssystem für ein Fahrrad beinhaltet ein vielstufiges, meist mechanisches Getriebe zwischen einer Antriebswelle und einer Abtriebswelle. Die Antriebssysteme für elektrisch unterstütze Fahrräder haben zusätzlich einen Elektromotor, der den Fahrer als Hauptantriebseinheit nach Bedarf unterstützt. Seit dem Markterfolg von Hybridantrieben, die zum Beispiel das Antriebssystem nach der DE 199 25 229 A1 nutzen, gibt es Überlegungen zu einem stufenlos elektrisch leistungsverzweigten Antriebssystem für Fahrräder. Durch den Markterfolg der elektrisch unterstützten Fahrräder wurden solche Entwicklungen noch stärker nahegelegt.

In der US 9,254,890 B2 ist ein Antriebssystem mit zwei elektrischen Motoren für eine Anwendung in Fahrrädern beschrieben. Eine recht detailliert ausgeführte Anordnung der Elemente des Antriebssystems geht aus Fig. 19 dieser Schrift hervor. Das Antriebssystem sitzt in einem Getriebegehäuse zwischen einer Antriebswelle 111 und einer koaxial dazu angeordneten Abtriebswelle 123. Wie bei Fahrradanwendungen üblich geht die Antriebswelle 111 in axialer Richtung durch das Antriebssystem hindurch, sodass sich an beiden Enden Antriebskurbeln anbringen lassen. Das mehrstufige Überlagerungsgetriebe beinhaltet eine Planetenradstufe mit einem Sonnenrad 113, einem Hohlrad 112' und einem Planetenträger 114 mit mehreren Planetenrädern 115, die auch hier als Stufenplaneten ausgeführt sind, von denen die größeren Stufen mit dem Sonnenrad 113 kämmen und die kleineren Stufen mit dem Hohlrad 112'. Die Antriebswelle 111 steht über eine Getriebestufe mit einem ersten elektrischen Motor 104 und dem Hohlrad 112 in Verbindung. Das Sonnenrad 113 steht direkt und koaxial mit einem zweiten elektrischen Motor 105 in Verbindung. Die Abtriebswelle 123 ist mit dem Planetenträger verbunden. Bei dieser Anordnung handelt es sich also um eine antriebsseitige Leistungsverzweigung.

Das hohe Drehmoment am Sonnenrad erfordert bei der geringen verfügbaren axialen Länge des Antriebssystems einen großen Luftspaltdurchmesser am zweiten elektrischen Motor 105. Deshalb ist dieser Motor als Außenläufermotor aufgebaut. Radial außerhalb des zweiten elektrischen Motors 105 sitzt auf einer zur Antriebswelle parallelen Achse der erste elektrische Motor 104. Dieser ist konventionell mit außenliegendem Stator aufgebaut. Wegen seines kleinen maximalen Drehmomentes benötigt er eine große Übersetzung zum Hohlrad der Planetenradstufe. Diese Übersetzung wird hier in Hinblick auf den begrenzten axialen Bauraum mittels nur einer Getriebestufe ausgeführt, was zu einem sehr großen Zahnrad 112 führt. Dies reduziert in einer Fahrradanwendung nachteilig den Abstand des Getriebekastens zur Fahrbahn und zum Hinterrad. Ein Großteil des axialen Bauraums wird in diesem Antriebssystem für die Stufenplaneten der Planetenradstufe verwendet. Diese Stufenplaneten sind hier aber erforderlich, um eine ausreichend große Standübersetzung zwischen dem relativ großen Sonnenrad und dem Hohlrad zu erreichen. Das Sonnenrad muss in dieser Ausführung so groß sein, weil sowohl die Antriebswelle, als auch Abtriebswelle durch das Sonnenrad hindurchgehen. Stufenplaneten erfordern zudem nicht nur viel axialen Bauraum, sondern sind auch teuer in der Herstellung und Montage und insbesondere an der kleinen Stufe schwierig zu lagern.

Aus der EP 2 218 634 B1 ist schließlich noch ein weiteres Antriebssystem mit zwei elektrischen Motoren für eine Anwendung in Fahrrädern beschrieben. Die einzige Figur dieser Schrift gibt die entscheidenden Merkmale dieses Antriebssystems wieder. Das Antriebssystem sitzt wieder zwischen einer Antriebswelle 2 und einer koaxial dazu angeordneten Abtriebswelle 32. Die Antriebswelle 2 geht wieder in axialer Richtung durch das Antriebssystem hindurch. Das Überlagerungssystem beinhaltet wieder eine dreiwellige Planetenradstufe mit einem Sonnenrad an einer Sonnenradwelle 18, einem Hohlrad an einer Hohlradwelle 20 und einem Planetenträger 20 mit mehreren einfachen Planetenrädern 16. Der Planetenträger 12 ist drehfest mit der Antriebswelle 2 verbunden. Die Sonnenradwelle 18 steht über eine erste Getriebestufe mit der Rotorwelle 26 eines ersten elektrischen Motors 22 in Verbindung. Die Hohlradwelle 20 steht über eine zweite Getriebestufe mit der Rotorwelle 28 eines zweiten elektrischen Motors 24 und mit der Abtriebswelle in Verbindung. Es handelt sich hier also wieder um eine abtriebsseitige Leistungsverzweigung. Die beiden elektrischen Motoren 22 und 24 sind über eine Leistungssteuerung 30 untereinander und mit einer Batterie 31 verbunden.

Wegen der kleinen max. Drehmomente der beiden elektrischen Motoren 22 und 24 sind hier wieder Getriebestufen mit großen Übersetzungen zwischen den Rotorwellen 26 bzw. 28 und den zugehörigen Anschlusswellen 18 bzw. 20 zu der Planetenradstufe nötig. Das führt auch hier zu nachteilig großen Getrieberädern koaxial zur Antriebswelle und damit einem großen radialen Bauraum um die Antriebswelle herum.

Vor dem Hintergrund des Standes der Technik besteht weiterhin Bedarf für ein verbessertes Antriebssystem, insbesondere eines Antriebssystem, das für den Einsatz an einem Fahrrad eingerichtet und vorgesehen ist.

Ein verbessertes Antriebssystem wird hierbei durch ein Antriebssystem des Anspruchs 1 bereitgestellt.

Gemäß der vorgeschlagenen Lösung sind die Antriebswelle und die Abtriebswelle und der zweite Motor mit seiner zweiten Rotorwelle koaxial auf einem ersten Wellenstrang angeordnet und weist das mehrstufige Überlagerungsgetriebe nur eine dreiwellige Planetenradstufe mit dem Sonnenrad, dem Hohlrad und dem Planetenträger auf, die auf einem zweiten Wellenstrang angeordnet ist, der parallel zum ersten Wellenstrang liegt. Ferner ist der erste Motor mit seiner ersten Rotorwelle auf einem dritten Wellenstrang angeordnet, der parallel zum ersten Wellenstrang und zum zweiten Wellenstrang liegt.

Das vorgeschlagene Antriebssystem kann hierbei, insbesondre für den Einsatz in einem Fahrrad, gegenüber bisher bekannten Lösungen Verbesserungen hinsichtlich Bauraum, Gewicht, Leistungsflüssen und Wirkungsgrad mit sich bringen und trägt hierbei unterschiedlichen Anforderungen Rechnungen, wie z.B., dass
- die Planetenradstufe eine große Standübersetzung benötigt, aber axial und radial klein bauen und deshalb keine teuren Stufenplaneten aufweisen soll;
- die verwendeten Getriebestufen keine großen Übersetzungen aufweisen sollen, für die große Zahnräder mit großen radialen Maßen nötig sind;
- alle Elemente des Antriebssystems möglichst so ineinander verschachtelt angeordnet werden sollen, dass sich eine minimale axiale und radiale Baulänge ergibt,
- eine Bodenfreiheit zwischen dem Gehäuse des Antriebssystems und einer Fahrbahn maximal werden soll und
- die Antriebswelle möglichst durch das Antriebssystem hindurchgehen und koaxial zur Abtriebswelle liegen sollte.

In einer Verwendung in einem Fahrrad führen die Merkmale des vorgeschlagenen Antriebssystems zu einem besonders kompakten Aufbau des Antriebssystems mit einer möglichst kurzen radialen Ausdehnung, insbesondere am ersten Wellenstrang. Die Anordnung der Planetenradstufe auf den zweiten Wellenstrang parallel zu dem ersten Wellenstrang mit koaxialem Antrieb und Abtrieb erlaubt einen kleinen Sonnenraddurchmesser. Auch bei vorteilhaft großen negativen Standübersetzungen in der dreiwelligen Planetenradstufe bleibt dann der Hohlraddurchmesser auch ohne den Einsatz von teuren Stufenplaneten klein.

Bei einem Ausführungsbeispiel eines vorgeschlagenen Antriebssystem ist beispielsweise eine betragsmäßig große Standübersetzung größer als |-4| erreicht. Das Antriebssystem kann insbesondere in einem solchen Ausführungsbeispiel derart konfiguriert und ausgelegt sein, dass über einer (erste) Getriebestufe die Drehzahl der Antriebswelle auf eine ca. dreimal größere Absolutdrehzahl der ersten Koppelwelle erhöht wird, die über die Planetenradstufe mit der zweiten Koppelwelle in Verbindung steht, und/oder dass eine Drehzahl der zweiten Koppelwelle über eine (zweite) Getriebestufe auf eine ca. 30% geringere Drehzahl der Abtriebswelle übertragen wird.

Der Achsversatz zwischen dem ersten Wellenstrang und dem zweiten Wellenstrang kann für eine Drehzahlsteigerung zwischen der sehr langsam laufenden Antriebswelle in einer Fahrradanwendung und der Planetenradstufe genutzt werden, wodurch die max. Drehmomentbelastungen und damit die Baugröße der Planetenradstufe weiter abnehmen. Dadurch reduzieren sich dann auch die erforderlichen Übersetzungen zwischen der dann mittelschnell drehenden Planetenradstufe und den schnell drehenden kleinen Motoren im stufenlosen Stellgetriebe.

In einer weiteren Ausgestaltung der vorgeschlagenen Lösung ist vorgesehen, dass a) die Antriebswelle auf dem ersten Wellenstrang über eine erste Stirnradstufe mit einer ersten Koppelwelle auf dem zweiten Wellenstrang in Verbindung steht, b) die Abtriebswelle auf dem ersten Wellenstrang über eine zweite Stirnradstufe mit einer zweiten Koppelwelle auf dem zweiten Wellenstrang in Verbindung steht, c) die zweite Rotorwelle des zweiten Motors auf dem ersten Wellenstrang über eine dritte Stirnradstufe mit einer dritten Koppelwelle auf dem zweiten Wellenstrang in Verbindung steht, die mit dem Sonnenrad verbunden ist, und d) die erste Rotorwelle des ersten Motors auf dem dritten Wellenstrang über eine vierte Stirnradstufe mit dem Hohlrad auf dem zweiten Wellenstrang in Verbindung steht.

Die erste Stirnradstufe erhöht in einer Ausführungsvariante die Drehzahl der Antriebswelle auf eine ca. dreimal größere Absolutdrehzahl der ersten Koppelwelle, die über die Planetenradstufe mit einer zweiten Koppelwelle in Verbindung steht. Die Drehzahl der zweiten Koppelwelle wird mit der Übersetzung der zweiten Stirnradstufe auf die Drehzahl der Abtriebswelle übertragen. Das Verhältnis der Übersetzungen der ersten Stirnradstufe und der zweiten Stirnradstufe, jeweils definiert als Verhältnis der Drehzahl des Zahnrades auf dem zweiten Wellenstrang zur Drehzahl des Zahnrades auf dem ersten Wellenstrang, definiert hierbei die max. Stellkoppelübersetzung zwischen der ersten Koppelwelle und der zweiten Koppelwelle, die je nach Ausführungsvariante des vorgeschlagenen Antriebssystems mit anderen Elementen der Planetenradstufe verbunden sind.

Nach einer ersten Ausführungsvariante sind auf dem zweiten Wellenstrang die erste Koppelwelle mit dem Planetenträger und die zweite Koppelwelle mit dem Hohlrad der Planetenradstufe verbunden. Alternativ sind auf dem zweiten Wellenstrang die erste Koppelwelle mit dem Hohlrad und die zweite Koppelwelle mit dem Planetenträger verbunden. Da die erste Rotorwelle des ersten Motors in der vorstehend angesprochenen ersten Ausführungsvariante immer mit dem Hohlrad verbunden ist, hat die erste Ausführungsvariante eine abtriebsseitige Leistungsverzweigung. Die vorstehende beschriebene zweite Ausführungsvariante hat demgegenüber eine antriebsseitige Leistungsverzweigung.

Die radiale Anordnung der Planetenradstufe zwischen den Rotorwellen der beiden Motoren ist in einem Ausführungsbeispiel mit einer axialen Anordnung der Getriebestufen zu einer insgesamt höchst kompakten Anordnung kombiniert. Hierzu werden fünf Anordnungsebenen definiert. Die zweite Stirnradstufe liegt dann z.B. in einer ersten Anordnungsebene und die Planetenradstufe und die vierte Stirnradstufe liegen in einer zweiten Anordnungsebene, die parallel zur ersten Anordnungsebene in einer Achsrichtung versetzt liegt, die von einem aus dem Getriebegehäuse vorstehenden Ausgang der Abtriebswelle in das hinein zeigt. Die erste Stirnradstufe liegt in einer dritten Anordnungsebene liegt, die ebenfalls in Achsrichtung gegenüber der zweiten Anordnungsebene versetzt liegt, und die dritte Stirnradstufe liegt in einer vierten Anordnungsebene, die auch in Achsrichtung gegenüber der dritten Anordnungsebene versetzt liegt. Die beiden Motoren liegen wiederum in einer fünften Anordnungsebene, die ebenfalls in Achsrichtung gegenüber der vierten Anordnungsebene versetzt liegt.

Um mit dem Ziel einer kurzen axialen Baulänge keine weiteren Anordnungsebenen zu benötigen, kann vorgesehen sein, dass ein Zahnrad der vierten Stirnradstufe auf dem zweiten Wellenstrang einen größeren Wälzkreisradius hat als das Hohlrad der dreiwelligen Planetenradstufe. Dadurch findet das Hohlrad innerhalb dieses Zahnrades der vierten Stirnradstufe in der zweiten Anordnungsebene Platz.

Um eine einfache Montage und Lagerung weiter zu unterstützen kann das Zahnrad der ersten Stirnradstufe auf der ersten Koppelwelle einen größeren Wälzkreisradius haben als das Sonnenrad auf der dritten Koppelwelle. Dadurch kann bei der Montage des Antriebssystems das Sonnenrad durch das Zahnrad auf der ersten Koppelwelle hindurch gesteckt werden.

Für die einfache Montage der übrigen Elemente des Antriebssystems und deren Lagerung im Getriebegehäuse kann das Getriebegehäuse mehrteilig aufgebaut sein und z.B. vier wesentliche Gehäuseteile aufweisen. So kann das Getriebegehäuse ein Hauptgehäuse mit einem (ggf. lösbar mit dem Hauptgehäuse verbundenen) Mittelsteg, eine mit dem Hauptgehäuse verbundene Motorenabdeckung und eine mit dem Hauptgehäuse verbundene Getriebeabdeckung aufweist. Bezugnehmend auf die vorstehend erläuterten Anordnungsebenen kann die Motorenabdeckung z.B. auf einer Seite des Getriebegehäuses an der fünften Anordnungsebene vorgesehen sein und die Getriebeabdeckung kann auf einer Seite des Getriebegehäuses an der ersten Anordnungsebene vorgesehen sein, durch die die Abtriebswelle aus dem Getriebegehäuse ragt.

Für einen geräuscharmen und verlustarmen Lauf aller Wellen in einem Antriebssystem sind statisch bestimmte Lagerungen aller Wellen im Getriebegehäuse oder auf anderen Wellen in möglichst kleinen Lagern mit ausreichend großem Lagerabstand vorteilhaft.

Die Antriebswelle kann sich über ein erstes Lager in der Abtriebswelle und über ein zweites Lager in der Motorenabdeckung abstützen. Die Abtriebswelle kann sich wiederum über ein drittes Lager in der Getriebeabdeckung und über ein viertes Lager auf der Antriebswelle abstützt. Grundsätzlich kann die Antriebswelle an beiden Seiten aus dem Getriebegehäuse herausragen.

Die erste Rotorwelle stützt sich in einem Ausführungsbeispiel über ein fünftes Lager in der Getriebeabdeckung und über ein sechstes Lager im Mittelsteg oder in der Motorenabdeckung ab.

In einer weiteren Ausgestaltung der Lagerungen kann vorgesehen sein, dass die zweite Rotorwelle über ein siebtes Lager auf der Antriebswelle oder im Mittelsteg und über ein achtes Lager auf der Antriebswelle oder in der Motorenabdeckung gelagert ist.

Betreffend die Lagerungen der Koppelwellen auf dem zweiten Wellenstrang ist beispielsweise vorgesehen, dass a) die zweite Koppelwelle auf dem zweiten Wellenstrang über ein neuntes Lager in der Getriebeabdeckung und über ein zehntes Lager im Mittelsteg oder in der Motorenabdeckung gelagert ist, b) sich die dritte Koppelwelle über ein elftes Lager auf der zweiten Koppelwelle und über ein zwölftes Lager im Mittelsteg abstützt, c) sich die erste Koppelwelle über ein dreizehntes Lager auf der dritten Koppelwelle und über ein vierzehntes Lager auf der zweiten Koppelwelle abstützt, d) ein fünfzehntes Lager axiale Kräfte zwischen der dritten Koppelwelle und dem Mittelsteg überträgt und e) ein sechzehntes Lager axiale Kräfte zwischen der ersten Koppelwelle und der dritten Koppelwelle überträgt.

Für eine rein mechanische Grundfunktion mit einer maximalen Übersetzung im Antriebssystem zwischen der Drehzahl der Antriebswelle und der Drehzahl der Abtriebswelle kann vorgesehen sein, dass zwischen dem ersten Lager und dem vierten Lager ein Freilauf zwischen der Antriebswelle und der Abtriebswelle sitzt, der ein Schnellerdrehen der Antriebswelle gegenüber der Abtriebswelle verhindert. Bei der Anwendung des erfindungsgemäßen Antriebssystems in einem Fahrrad kann dann der Fahrer auch bei Totalausfall des elektrischen Systems oder der Steuerung mit geringer Geschwindigkeit und maximaler Übersetzung auch in schwierigem Gelände weiterfahren.

Für eine präzise und zuverlässige Regelung des Antriebssystems mit hohem Antriebskomfort benötigt die Steuerung in kurzen Taktzeiten präzise Signale. Dazu ist nach in einem Ausführungsbeispiel z.B. vorgesehen, dass an und auf der ersten Rotorwelle ein erster Resolver mit Sensor und Geberrad für die (exakte) Messung einer Winkelposition und einer Drehzahl sitzt und/oder dass auf der zweiten Rotorwelle ein zweiter Resolver mit Sensor und Geberrad für die (exakte) Messung einer Winkelposition und einer Drehzahl sitzt und/oder dass ein Drehzahlmesssystem an und auf der Antriebswelle sitzt und/oder dass ein Beschleunigungssensor und/oder ein Neigungssensor auf dem Getriebegehäuse sitzt.

Hochpräzise Resolver ermöglichen z.B. genaue Drehzahl- und/oder Drehmomentregelungen an den beiden Motoren, je nach Betriebsweise des Antriebssystems. Ein zusätzliches (optionales) Drehzahlmesssystem kann an und auf der Antriebswelle eine gewisse Redundanz für eine höhere Systemsicherheit ermöglichen. Aus den Beschleunigungs- und Neigungssignalen eines oder mehrerer Sensoren lässt sich in Verbindung mit der Kenntnis der übertragenen Leistung auf das Systemgewicht und die Dynamik des Antriebsdrehmomentes schließen. Diese Information kann in der Leistungssteuerung für eine schnellere und komfortablere Regelung genutzt werden.

Die vorgeschlagene Lösung ist grundsätzlich nicht auf die vorstehend und nachstehend beschriebenen Details beschränkt, sondern erstreckt sich auch auf gleichwirkende Lösungen. Exemplarisch gilt, dass
- eine Stirnrad-Getriebestufe durch eine Zahnriemen- Getriebestufe ersetzt sein kann,
- ein Kugellager für eine gekoppelte Abstützung von Radial- und Axialkräften durch eine Kombination eines reinen Radiallagers und eines Axiallagers ersetzt sein kann, und/oder
- ein Wälzlager durch ein Gleitlager ersetzt sein kann.

Die beigefügten Figuren veranschaulichen exemplarisch mögliche Ausführungsvarianten der vorgeschlagenen Lösung.

Hierbei zeigen:
- Fig. 1: eine Getriebestruktur mit abtriebsseitiger Leistungsverzweigung gemäß einer ersten Ausführungsvariante eines vorgeschlagenen Antriebssystems für die Anwendung in einem elektrisch unterstützten Fahrrad;
- Fig. 2: einen konstruktiven Entwurf des Antriebssystems nach Fig. 1 zur Darstellung der relativen Lagen der wesentlichen mechanischen Bauteile wie Wellen, Getriebestufen und Lagerungen zueinander;
- Fig. 3: eine Getriebestruktur mit antriebsseitiger Leistungsverzweigung gemäß einer zweiten Ausführungsvariante eines vorgeschlagenen Antriebssystems für die Anwendung in einem elektrisch unterstützten Fahrrad,
- Fig. 4: einen konstruktiven Entwurf des Antriebssystems nach Fig. 3 zur Darstellung der relativen Lagen der wesentlichen mechanischen Bauteile wie Wellen, Getriebestufen und Lagerungen zueinander.

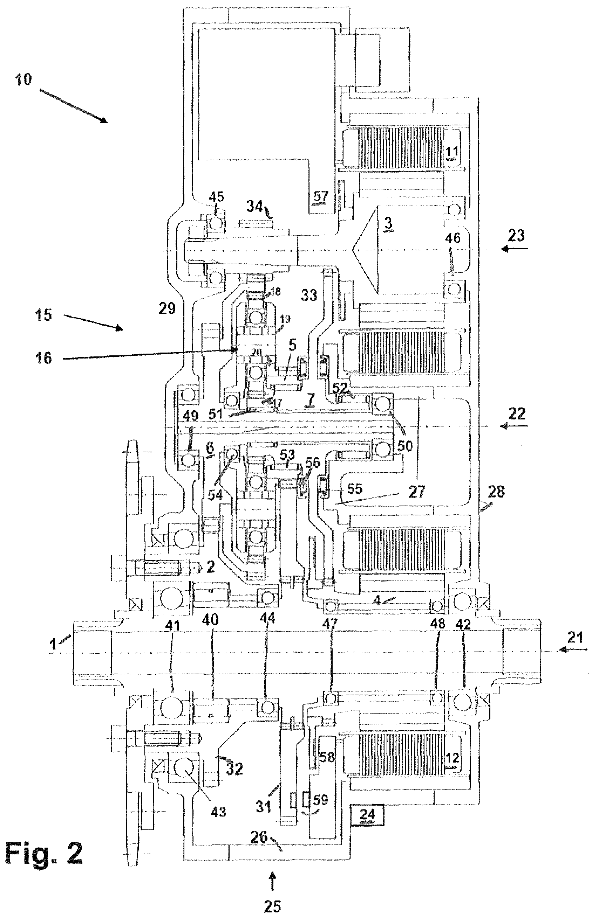

Die Fig. 1 und 2 zeigen die Getriebestruktur und einen 2D-Konstruktionsentwurf einer ersten Ausführungsvariante des erfindungsgemäßen Antriebssystems 10 zwischen der Antriebswelle 1 und der Abtriebswelle 2 in einem Getriebegehäuse 25 für die Anwendung in einem elektrisch unterstützten Fahrrad. Die Antriebswelle 1 geht durch das Getriebegehäuse 25 hindurch und ist auf jeder Seite mit einer Tretkurbel verbunden, über die der Fahrer das Antriebssystem 10 antreibt. Die Abtriebswelle 2 ragt nur auf einer Seite aus dem Getriebegehäuse 25 heraus und ist mit einem Kettenrad oder einer Zahnriemenscheibe verbunden, um von dort aus das Hinterrad des Fahrrades anzutreiben.

Das Antriebssystem 10 weist einen ersten Motor 11 mit einer ersten Rotorwelle 3 auf. Der Motor ist in dieser Anwendung als Elektromotor ausgeführt. Das Antriebssystem 10 hat auch einen zweiten Motor 12 mit einer zweiten Rotorwelle 4. Auch der zweite Motor ist in dieser Anwendung als Elektromotor ausgeführt. Die beiden Elektromotoren 11 und 12 stehen über eine Leistungssteuerung 8 in Verbindung und bilden damit ein stufenloses elektrisches Stellgetriebe. Die Leistungssteuerung 8 steht auch mit einem Energiespeicher 9 in Form einer Batterie in Verbindung. Damit kann die Abtriebswelle 2 über den ersten Elektromotor 11 auch rein elektrisch angetrieben werden. Der Energiespeicher 9 kann dann auch als Bremsenergiespeicher genutzt werden, wenn an der Abtriebswelle 2 Bremsleistung ins Antriebssystem 10 fließt.

Die Antriebswelle 1, die Abtriebswelle 2 und die beiden Rotorwellen 3 und 4 sind über ein mehrstufiges Überlagerungsgetriebe 15 gekoppelt, das mehrere Getriebestufen mit einem Freiheitsgrad 1 und mindestens eine Planetenradstufe 16 mit einem Freiheitsgrad 2 aufweist. Die Getriebestufen sind hier als Stirnradstufen ausgeführt. Es sind aber auch Zahnriemen-Getriebestufen denkbar. Die dreiwellige Planetenradstufe 16 hat ein Sonnenrad 17, ein Hohlrad 18 und einen Planetenträger 19 mit mehreren Planetenrädern 20, die auf Planetenradbolzen gelagert sind.

Die Elemente des Antriebssystems 10 liegen auf drei Wellensträngen 21, 22 und 23 verteilt, die alle parallel zu einander im verfügbaren Bauraum des Getriebegehäuses 25 angeordnet sind.

Die Antriebswelle 1, die Abtriebswelle 2 und die zweite Rotorwelle 4 des zweiten elektrischen Motors 12 sind koaxial auf dem ersten Wellenstrang 21 angeordnet. Die dreiwellige Planetenradstufe 16 des mehrstufigen Überlagerungsgetriebes ist auf dem zweiten Wellenstrang 22 angeordnet. Die erste Rotorwelle 3 des ersten elektrischen Motors 11 ist auf einem dritten Wellenstrang 23 angeordnet.

Auf dem ersten Wellenstrang 21 umschließt die außen liegende Abtriebswelle 2 die innenliegende Antriebswelle 1 auf einer Seite des Getriebegehäuses 25 und die zweite Rotorwelle 4 umschließt die Antriebswelle 1 auf der anderen Seite des Getriebegehäuses 25.

Die Anordnung der dreiwelligen Planetenradstufe 16 auf dem zweiten Wellenstrang ermöglicht die Verwendung eines im Durchmesser kleinen Sonnenradrades 17. Das wiederum ermöglicht eine betragsmäßig große Standübersetzung größer als |-4| bei einem dann noch vertretbar großen Hohlrad 18. Bei einer so großen negativen Standübersetzung werden die einfachen und deshalb schmalen Planetenräder 20 so groß, dass hier ausreichend große schmale Kugellager als Planetenradlager Platz finden. Insgesamt führt das zu einer in axialer Richtung vorteilhaft sehr kurz bauenden Planetenradstufe 16.

Zur kinematischen Kopplung der auf den drei Wellensträngen 21, 22 und 23 verteilten Elemente des Antriebssystems 10 dienen vier als Stirnradstufen ausgeführte Getriebestufen. Die Antriebswelle 1 auf dem ersten Wellenstrang 21 steht über eine erste Stirnradstufe 31 mit einer ersten Koppelwelle 5 auf dem zweiten Wellenstrang 22 in Verbindung. Die Abtriebswelle 2 auf dem ersten Wellenstrang 21 steht über eine zweite Stirnradstufe 32 mit einer zweiten Koppelwelle 6 auf dem zweiten Wellenstrang 22 in Verbindung. Die zweite Rotorwelle 4 des zweiten Elektromotors 12 auf dem ersten Wellenstrang 21 steht über eine dritte Stirnradstufe 33 mit einer dritten Koppelwelle 7 auf dem zweiten Wellenstrang 22 in Verbindung. Diese dritte Koppelwelle trägt auch das Sonnenrad 17. Die erste Rotorwelle 3 des ersten Elektromotors 11 auf dem dritten Wellenstrang 23 steht über eine vierte Stirnradstufe mit dem Hohlrad 18 der Planetenradstufe 16 auf dem zweiten Wellenstrang 22 in Verbindung.

Die erste Stirnradstufe 31 erhöht die Drehzahl der Antriebswelle 1 auf eine ca. dreimal größere Absolutdrehzahl der ersten Koppelwelle 5, die über die Planetenradstufe 16 mit der zweiten Koppelwelle 6 in Verbindung steht. Die Drehzahl der zweiten Koppelwelle 6 wird mit der Übersetzung der zweiten Stirnradstufe 32 auf eine ca. 30% geringere Drehzahl der Abtriebswelle 2 übertragen. Das Verhältnis der Übersetzungen der ersten Stirnradstufe 31 und der zweiten Stirnradstufe 32, jeweils definiert als Verhältnis der Drehzahl des Zahnrades auf dem zweiten Wellenstrang 22 zur Drehzahl des Zahnrades auf dem ersten Wellenstrang 21, definiert die max. Stellkoppelübersetzung zwischen der ersten Koppelwelle 5 und der zweiten Koppelwelle 6. Für einen hohen Wirkungsgradverlauf über der Stellkoppelübersetzung im Stellbereich ist es vorteilhaft, wenn die maximale und die minimale Stellkoppelübersetzung annähernd reziprok sind. Das lässt sich mit so einer Auslegung leicht erreichen.

Auf dem zweiten Wellenstrang 22 ist die erste Koppelwelle 5 mit dem Planetenträger 19, die zweite Koppelwelle 6 mit dem Hohlrad 18 und die dritte Koppelwelle mit dem Sonnenrad 17 der Planetenradstufe 16 verbunden. Da die erste Rotorwelle 3 des ersten Motors 11 mit dem Hohlrad 18 und damit mit der Abtriebswelle 2 verbunden ist, hat die erste Ausführungsvariante eine abtriebsseitige Leistungsverzweigung.

In Fig. 1 sind fünf Anordnungsebenen 35, 36, 37, 38 und 39 markiert, deren Nummern in einer Achsrichtung 30 ansteigen. Die Achsrichtung 30 zeigt von der Stelle, an der die Abtriebswelle 2 aus dem Getriebegehäuse 25 austritt, ins Getriebegehäuse 25 hinein. In Fig. 1 ist dann gut erkennbar, dass die zweite Stirnradstufe 32 in der ersten Anordnungsebene 35 liegt und dass die Planetenradstufe 16 und die vierte Stirnradstufe 34 in der zweiten Anordnungsebene 36 liegen, die parallel zur ersten Anordnungsebene 35 in Achsrichtung 30 versetzt liegt, und dass die erste Stirnradstufe 31 in einer dritten Anordnungsebene 37 liegt, die auch in Achsrichtung 30 gegenüber der zweiten Anordnungsebene 36 versetzt liegt, und dass die dritte Stirnradstufe 33 in einer vierten Anordnungsebene 38 liegt, die auch in Achsrichtung 30 gegenüber der dritten Anordnungsebene 37 versetzt liegt, und dass die beiden Motoren 11 und 12 in einer fünften Anordnungsebene 39 liegen, die ebenfalls in Achsrichtung 30 gegenüber der vierten Anordnungsebene 38 versetzt liegt.

Die Planetenradstufe 16 und die vierte Stirnradstufe 34 können in der gleichen zweiten Anordnungsebene 36 liegen, weil das Zahnrad der vierten Stirnradstufe 34 auf dem zweiten Wellenstrang 22 einen größeren Wälzkreisradius hat als das Hohlrad 18 der dreiwelligen Planetenradstufe 16. Dadurch findet das Hohlrad 18 innerhalb dieses Zahnrades der vierten Stirnradstufe 34 in der zweiten Anordnungsebene 36 Platz.

Diese axiale Anordnung der Stirnradstufen 31, 32, 33 und 34 in der Umgebung der Planetenradstufe 16 auf dem zweiten Wellenstrang 22 führt im Zusammenhang mit der erfindungsgemäßen Aufteilung der Antriebselemente auf die drei Wellenstränge 21, 22 und 23 zu einem äußerst kompakten mehrstufigen Überlagerungsgetriebe 15. Das bietet entscheidende Voraussetzungen für ein wettbewerbsfähig leichtes und kleines Antriebssystem 10.

Aus den Fig. 1 und 2 wird außerdem deutlich, dass das Zahnrad der ersten Stirnradstufe 31 auf der ersten Koppelwelle 5 einen größeren Wälzkreisradius hat als das Sonnenrad 17 auf der dritten Koppelwelle 7. Dadurch kann bei der Montage des Antriebssystems 10 das Sonnenrad 17 durch das Zahnrad auf der ersten Koppelwelle 5 hindurch gesteckt werden.

Für die einfache Montage der übrigen Elemente des Antriebssystems 10 und deren Lagerung im Getriebegehäuse 25 weist das Getriebegehäuse 25 vier wesentliche Gehäuseteile auf. Das Getriebegehäuse 25 besteht aus einem Hauptgehäuse 26 mit einen damit verbindbaren oder verbundenen Mittelsteg 27 und einer mit dem Hauptgehäuse 26 verbindbaren oder verbundenen Motorenabdeckung 28 auf der Seite der fünften Anordnungsebene 39 und einer mit dem Hauptgehäuse 26 verbindbaren oder verbundenen Getriebeabdeckung 29 auf der Seite der ersten Anordnungsebene 35, durch die die Abtriebswelle 2 aus dem Getriebegehäuse 25 ragt.

Der in Fig. 2 dargestellte Konstruktionsentwurf verdeutlicht mögliche Lagerungen aller Wellen des Antriebssystems 10 im Getriebegehäuse 25 oder auf anderen Wellen. Dabei ist es das Ziel statisch bestimmte Lagerungen mit großem Lagerabstand und kleinen Lagergrößen zu realisieren. Dies sind gute Voraussetzungen für einen geräuscharmen und verlustarmen Lauf aller Wellen.

Auf dem ersten Wellenstrang 21 ist die Antriebswelle 1 über ein erstes Lager 41 in der Abtriebswelle 2 und über ein zweites Lager 42 in der Motorenabdeckung 28 abstützt. Die Antriebswelle 1 ragt an beiden Seiten aus dem Getriebegehäuse 25 heraus und erfährt aus dem Antrieb große radiale Belastungen. Die Lager 41 und 42 haben einen maximal großen Abstand für eine optimale Lagerung der Antriebswelle 1. Die Abtriebswelle 2 ist über ein drittes Lager 43 in der Getriebeabdeckung 29 und über ein viertes Lager 44 auf der Antriebswelle abgestützt. Die Lager 41 und 43 liegen annähernd radial umeinander, sodass die radiale Lagerlast von Lager 41 direkt über Lager 43 im Getriebegehäuse 25 abgestützt wird.

Die erste Rotorwelle 3 stützt sich über ein fünftes Lager 45 in der Getriebeabdeckung 29 und über ein sechstes Lager 46 in der Motorenabdeckung 28 ab. Das Lager 46 lässt sich aber auch mit ähnlich guter Funktion zwischen dem Mittelsteg 27 und der Rotorwelle 3 platzieren.

Die zweite Rotorwelle 4 ist über ein siebtes Lager 47 und ein achtes Lager 48 auf der Antriebswelle 1 gelagert. Das Lager 47 kann aber auch zwischen Rotorwelle 4 und Mittelsteg 27 sitzen, hat dann aber einen größeren Durchmesser. Das Lager 48 könnte auch zwischen Rotorwelle 4 und Motorenabdeckung 28 sitzen, was aber auch mehr axialen und radialen Bauraum erfordern würde.

Auf dem zweiten Wellenstrang 22 sind mehrere Wellen ineinander, aber letztendlich im Getriebegehäuse 25 gelagert. Die zweite Koppelwelle 6 ist die auf dem zweiten Wellenstrang 22 höchst belastete Welle und ist deshalb als innerste Welle ausgeführt, die über ein neuntes Lager 49 in der Getriebeabdeckung 29 und über ein zehntes Lager 50 im Mittelsteg 27 gelagert ist. Dadurch ergibt sich ein vorteilhaft großer Lagerabstand. Alternativ könnte das Lager 50 sogar auch im Motorendeckel 28 sitzen, was den Lagerabstand zwar noch weiter vergrößern würde, aber zu Lasten der Biegesteifigkeit der zweiten Koppelwelle 6.

Die dritte Koppelwelle 7 ist über ein elftes Lager 51 auf der zweiten Koppelwelle 6 und über ein zwölftes Lager 52 im Mittelsteg 27 abgestützt. Die erste Koppelwelle 5 stützt sich über ein dreizehntes Lager 53 auf der dritten Koppelwelle 7 und über ein vierzehntes Lager 54 auf der zweiten Koppelwelle 6 ab. Ein fünfzehntes Lager 55 überträgt zudem axiale Kräfte zwischen der dritten Koppelwelle 7 und dem Mittelsteg 27 und ein sechzehntes Lager 56 überträgt axiale Kräfte zwischen der ersten Koppelwelle 5 und der dritten Koppelwelle 7.

In der ersten Anordnungsebene 35 mit der zweiten Stirnradstufe 32 befindet sich ein Freilauf 40 zwischen der Antriebswelle 1 und der Abtriebswelle 2. Dies ist vorzugs- weise ein Klemmkörperfreilauf, weil diese Bauform eines Freilaufs eine hohe Drehmomentkapazität aufweist und gehärtete zylindrische Oberflächen der zu koppelnden Wellen mitbenutzen kann. In der konstruktiven Ausgestaltung nach Fig. 2 hat der Freilauf aber einen eigenen Innenring und einen eigenen Außenring.

In einer Fahrradanwendung kann ein kräftiger Fahrer durchaus große Belastungen stoßartig über die Tretkurbel auf die Antriebswelle aufbringen. So etwas kommt insbesondere bei starken Beschleunigungen und steilen Bergauffahrten vor, also in Fahrsituationen mit großer Getriebeübersetzung. In diesen Fahrsituationen schützt nun der Freilauf 40 das Antriebssystem, weil er in der maximalen Getriebeübersetzung die Antriebswelle 1 direkt mit der Abtriebswelle 2 verbindet.

Wenn die Regelung in der Leistungssteuerung 8 das maximale Drehmoment des zweiten Motors 12 begrenzt, beschleunigt ein zu großes, nicht mehr über den zweiten Motor 12 abstützbares Antriebsdrehmoment die Antriebswelle 1 so weit, bis der Freilauf 40 die Antriebswelle 1 mit der Abtriebswelle 2 automatisch kraftschlüssig koppelt. Der Freilauf 40 dient damit zum einen als Überlastschutz des Antriebssystems und zum anderen garantiert er eine mechanische Grundfunktion des Antriebs bei Problemen im elektrischen System, zum Beispiel bei einem Spannungsabfall, oder bei Problemen in der Steuerung/Regelung, zum Beispiel beim Ausfall von Sensoren.

Für eine präzise und zuverlässige Regelung des Antriebssystems mit hohem Antriebskomfort benötigt die Steuerung in kurzen Taktzeiten präzise Signale. An und auf der ersten Rotorwelle 3 sitzt dazu ein erster Resolver 57 mit Sensor und Geberrad für die exakte Messung der Winkelposition und der Drehzahl. An und auf der zweiten Rotorwelle 4 sitzt ein zweiter Resolver 58. Ein einfaches Drehzahlmesssystem 59 misst darüber hinaus die Drehzahl der Antriebswelle 1. Die hochpräzisen Resolver 57 und 58 sind Voraussetzungen für eine genaue Drehzahl- und/oder Drehmomentregelung an den beiden Motoren 11 und 12. Das zusätzliche und optionale Drehzahlmesssystem 58 an und auf der Antriebswelle ermöglicht eine gewisse Redundanz für eine höhere Systemsicherheit. Es kann zum Beispiel zur Plausibilitätsprüfung der Resolversignale dienen und ermöglicht eine funktionsreduzierte Notfunktion bei Ausfall eines Resolvers.

Am Getriebegehäuse 25 ist in Fig. 2 noch ein Beschleunigungs- und Neigungssensor 24 verbaut, wie er heute zum Beispiel in vielen Smartphones benutzt wird. Aus den Beschleunigungs- und Neigungssignalen lässt sich in Verbindung mit der Kenntnis der übertragenen Leistung auf das Systemgewicht und die Dynamik des Antriebsdrehmomentes schließen. Diese Information kann in der Leistungssteuerung für eine schnellere und komfortablere Regelung genutzt werden.

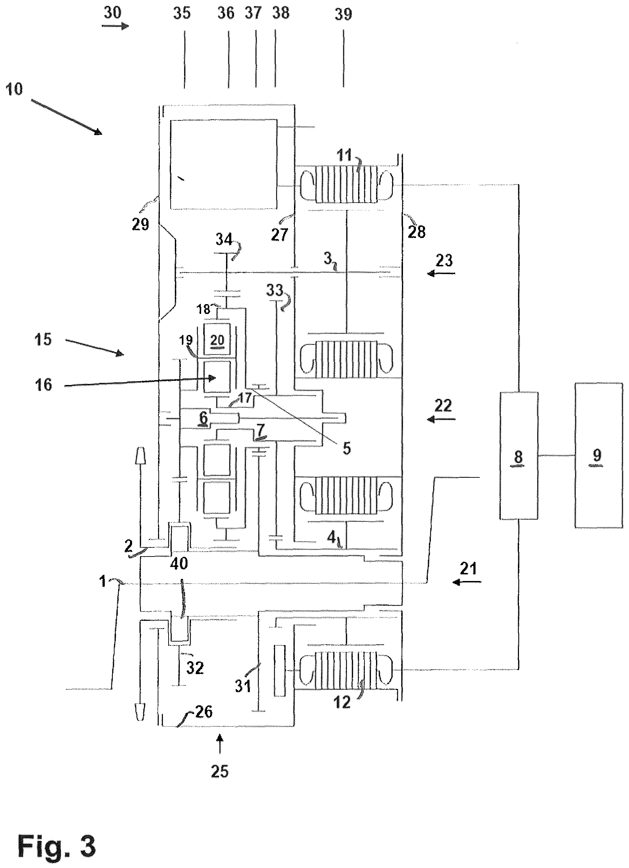

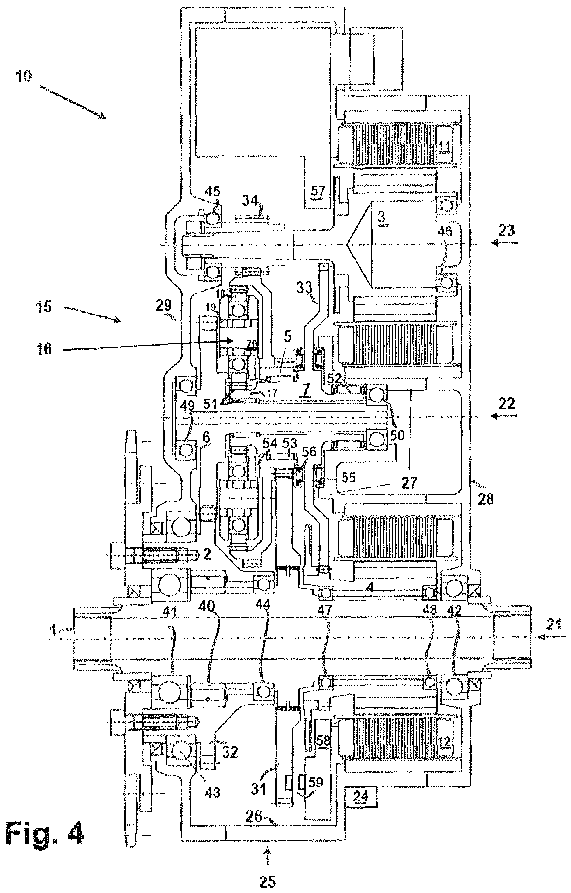

Die Fig. 3 und 4 zeigen die Getriebestruktur und einen 2D-Konstruktionsentwurf der zweiten Ausführungsvariante des erfindungsgemäßen Antriebssystems 10 zwischen der Antriebswelle 1 und der Abtriebswelle 2 in einem Getriebegehäuse 25 für die Anwendung in einem elektrisch unterstützten Fahrrad.

In der ersten Ausführungsvariante ist die erste Koppelwelle 5 mit dem Planetenträger 9 und die zweite Koppelwelle 6 mit dem Hohlrad 18 der Planetenradstufe 20 verbunden. In der zweiten Ausführungsvariante ist die erste Koppelwelle 5 mit dem Hohlrad 18 und die zweite Koppelwelle 6 mit dem Planetenträger der Planetenradstufe 20 verbunden. Das sind die einzigen strukturellen Unterschiede zwischen den beiden Ausführungsvarianten.

Da der erste Rotor 3 des ersten Motors 11 in beiden Ausführungsvarianten über die vierte Stirnradstufe 34 mit dem Hohlrad 18 in Verbindung steht (Übersetzung im Bereich von |-8|), sind in der ersten Ausführungsvariante die Drehzahlen der Abtriebswelle 2 und der ersten Rotorwelle 3 proportional. In der zweiten Ausführungsvariante sind die Drehzahlen der Antriebswelle 1 und der ersten Rotorwelle 3 proportional. Beide Varianten sind technisch sinnvoll. In einem elektrisch unterstützten Fahrradantrieb ist die erste Ausführungsvariante umso vorteilhafter, je höher die elektrische Unterstützung ist, weil die elektrische Unterstützungsleistung dann auf direkterem Weg von dem Energiespeicher 9 hauptsächlich über den ersten Motor 11 auf das angetriebene Rad wirkt.

In der konstruktiven Ausgestaltung ergeben sich daraus nur minimale Unterschiede bezüglich der Lagerung der drei Koppelwellen ineinander. Diese betrifft hauptsächlich die Ausgestaltung der Lager 51 und 54.

### Bezugszeichenliste

- 1: Antriebswelle
- 2: Abtriebswelle
- 3: erste Rotorwelle
- 4: zweite Rotorwelle
- 5: erste Koppelwelle
- 6: zweite Koppelwelle
- 7: dritte Koppelwelle
- 8: Leistungssteuerung
- 9: Energiespeicher (Batterie oder Druckspeicher)
- 10: Antriebssystem
- 11: erster (elektrischer oder hydraulischer) Motor
- 12: zweiter (elektrischer oder hydraulischer) Motor
- 13: erster Stator
- 14: zweiter Stator
- 15: Überlagerungsgetriebe
- 16: dreiwellige Planetenradstufe PG
- 17: Sonnenrad
- 18: Hohlrad
- 19: Planetenträger
- 20: Planetenräder
- 21: erster Wellenstrang
- 22: zweiter Wellenstrang
- 23: dritter Wellenstrang
- 24: Beschleunigungs- und Neigungssensor
- 25: Getriebegehäuse
- 26: Hauptgehäuse
- 27: Mittelsteg
- 28: Motorenabdeckung
- 29: Getriebeabdeckung
- 30: Achsrichtung
- 31: erste Stirnradstufe
- 32: zweite Stirnradstufe
- 33: dritte Stirnradstufe
- 34: vierte Stirnradstufe
- 35: erste Anordnungsebene
- 36: zweite Anordnungsebene
- 37: dritte Anordnungsebene
- 38: vierte Anordnungsebene
- 39: fünfte Anordnungsebene
- 40: Freilauf
- 41: erstes Lager
- 42: zweites Lager
- 43: drittes Lager
- 44: viertes Lager
- 45: fünftes Lager
- 46: sechstes Lager
- 47: siebtes Lager
- 48: achtes Lager
- 49: neuntes Lager
- 50: zehntes Lager
- 51: elftes Lager
- 52: zwölftes Lager
- 53: dreizehntes Lager
- 54: vierzehntes Lager
- 55: fünfzehntes Lager
- 56: sechzehntes Lager
- 57: erster Resolver mit Sensor und Geberrad
- 58: zweiter Resolver mit Sensor und Geberrad
- 59: Drehzahlmesssystem

## Patentansprüche

1. Antriebssystem (10), mit
- einem Getriebegehäuse (25)
- einer Antriebswelle (1),
- einer Abtriebswelle (2),
- einem mehrstufigen Überlagerungsgetriebe (15), über das die Antriebswelle (1) und die Abtriebswelle (2) mit einer ersten Rotorwelle (3) eines ersten Motors (11) und mit einer zweiten Rotorwelle (4) eines zweiten Motors (12) verbunden sind,
- einer Leistungssteuerung (8), über die die beiden Motoren (11, 12) zu einem stufenlosen Stellgetriebe verkoppelt sind, und
- einem Energiespeicher (9), mit dem die beiden Motoren (11, 12) verbunden sind, wobei das mehrstufige Überlagerungsgetriebe (15) eine Planetenradstufe (16) mit einem Sonnenrad (17), einem Hohlrad (18) und einem Planetenträger (19) mit mehreren Planetenrädern (20) aufweist, wobei
- die Antriebswelle (1), die Abtriebswelle (2) und der zweite Motor (12) mit seiner zweiten Rotorwelle (4) koaxial auf einem ersten Wellenstrang (21) angeordnet sind,
- das mehrstufige Überlagerungsgetriebe (15) mit dem Sonnenrad (17), dem Hohlrad (18) und dem Planetenträger (19) nur als eine dreiwellige Planetenradstufe ausgeführt ist, und
- der erste Motor (11) mit seiner ersten Rotorwelle (3) auf einem dritten Wellenstrang (23) angeordnet ist, der parallel zum ersten Wellenstrang (21) und zu einem zweiten Wellenstrang (22) liegt,
**dadurch gekennzeichnet, dass**
die dreiwellige Planetenradstufe auf einem zweiten Wellenstrang (22) angeordnet ist, der parallel zum ersten Wellenstrang (21) liegt, und der Energiespeicher (9) auch zur Speicherung von Bremsenergie vorgesehen ist, wenn an der Abtriebswelle (2) Bremsleistung ins Antriebssystem (10) fließt.

2. Antriebssystem (10) nach Anspruch 1, **dadurch gekennzeichnet, dass**
- die Antriebswelle (1) auf dem ersten Wellenstrang (21) über eine erste Stirnradstufe (31) mit einer ersten Koppelwelle (5) auf dem zweiten Wellenstrang (22) in Verbindung steht,
- die Abtriebswelle (2) auf dem ersten Wellenstrang (21) über eine zweite Stirnradstufe (32) mit einer zweiten Koppelwelle (6) auf dem zweiten Wellenstrang (22) in Verbindung steht,
- die zweite Rotorwelle (4) des zweiten Motors (12) auf dem ersten Wellenstrang (21) über eine dritte Stirnradstufe (33) mit einer dritten Koppelwelle (7) auf dem zweiten Wellenstrang (22) in Verbindung steht, die mit dem Sonnenrad (17) verbunden ist,
- und die erste Rotorwelle (3) des ersten Motors (11) auf dem dritten Wellenstrang (23) über eine vierte Stirnradstufe (34) mit dem Hohlrad (18) auf dem zweiten Wellenstrang (22) in Verbindung steht.

3. Antriebssystem (10) nach Anspruch 1 oder 2, **dadurch gekennzeichnet, dass**
- auf dem zweiten Wellenstrang (22) die erste Koppelwelle (5) mit dem Planetenträger (19) und die zweite Koppelwelle (6) mit dem Hohlrad (18) der Planetenradstufe (16) verbunden sind, oder
- auf dem zweiten Wellenstrang (22) die erste Koppelwelle (5) mit dem Hohlrad (18) und die zweite Koppelwelle (6) mit dem Planetenträger (19) der Planetenradstufe (16) verbunden sind.

4. Antriebssystems (10) nach mindestens einem der Ansprüche 1 bis 3, **dadurch gekennzeichnet, dass**
- die zweite Stirnradstufe (32) in einer ersten Anordnungsebene (35) liegt,
- die Planetenradstufe (16) und die vierte Stirnradstufe (34) in einer zweiten Anordnungsebene (36) liegen, die parallel zur ersten Anordnungsebene (35) in Achsrichtung (30) versetzt liegt, die von einem aus dem Getriebegehäuse (25) vorstehenden Ausgang der Abtriebswelle (2) in das Getriebegehäuse (25) hinein zeigt,
- die erste Stirnradstufe (31) in einer dritten Anordnungsebene (37) liegt, die ebenfalls in Achsrichtung (30) gegenüber der zweiten Anordnungsebene (36) versetzt liegt,
- die dritte Stirnradstufe (33) in einer vierten Anordnungsebene (38) liegt, die ebenfalls in Achsrichtung (30) gegenüber der dritten Anordnungsebene (37) versetzt liegt,
- und die beiden Motoren (11 und 12) in einer fünften Anordnungsebene (39) liegen, die ebenfalls in Achsrichtung (30) gegenüber der vierten Anordnungsebene (38) versetzt liegt.

5. Antriebssystem (10) nach mindestens einem der Ansprüche 1 bis 4, **dadurch gekennzeichnet, dass** das Zahnrad der vierten Stirnradstufe (34) auf dem zweiten Wellenstrang (22) einen größeren Wälzkreisradius hat als das Hohlrad (18) der dreiwelligen Planetenradstufe (16).

6. Antriebssystem (10) nach mindestens einem der Ansprüche 1 bis 5, **dadurch gekennzeichnet, dass** das Zahnrad der ersten Stirnradstufe (31) auf der ersten Koppelwelle (5) einen größeren Wälzkreisradius hat als das Sonnenrad (17) der dritten Koppelwelle (7).

7. Antriebssystem (10) nach mindestens einem der Ansprüche 1 bis 6, **dadurch gekennzeichnet, dass** das Getriebegehäuse (25) ein Hauptgehäuse (26) mit einem Mittelsteg (27), eine mit dem Hauptgehäuse (27) verbundene Motorenabdeckung (28) und eine mit dem Hauptgehäuse (26) verbundene Getriebeabdeckung (29) aufweist.

8. Antriebssystem (10) nach den Ansprüchen 4 und 7, **dadurch gekennzeichnet, dass** die Motorenabdeckung (28) auf einer Seite des Getriebegehäuses (25) an der fünften Anordnungsebene (39) vorgesehen ist und die Getriebeabdeckung (29) auf einer Seite des Getriebegehäuses (25) an der ersten Anordnungsebene (35) vorgesehen ist, durch die die Abtriebswelle (2) aus dem Getriebegehäuse (25) ragt.

9. Antriebssystem (10) nach Anspruch 7 oder 8, **dadurch gekennzeichnet, dass**
- sich die Antriebswelle (1) über ein erstes Lager (41) in der Abtriebswelle (2) und über ein zweites Lager (42) in der Motorenabdeckung (28) abstützt,
- die Antriebswelle (1) an beiden Seiten aus dem Getriebegehäuse (25) herausragt,
- und sich die Abtriebswelle (2) über ein drittes Lager (43) in der Getriebeabdeckung (29) und über ein viertes Lager (44) auf der Antriebswelle (1) abstützt.

10. Antriebssystem (10) nach mindestens einem der Ansprüche 7 bis 9, **dadurch gekennzeichnet, dass** sich die erste Rotorwelle (3) über ein fünftes Lager (45) in der Getriebeabdeckung (29) und über ein sechstes Lager (46) im Mittelsteg oder in der Motorenabdeckung (28) abstützt.

11. Antriebssystem (10) nach mindestens einem der Ansprüche 7 bis 10, **dadurch gekennzeichnet, dass** die zweite Rotorwelle (4) über ein siebtes Lager (47) auf der Antriebswelle (1) oder im Mittelsteg (27) und über ein achtes Lager (48) auf der Antriebswelle (1) oder im der Motorenabdeckung (28) gelagert ist.

12. Antriebssystem (10) nach Anspruch 2 und mindestens einem der Ansprüche 7 bis 11, **dadurch gekennzeichnet, dass**
- die zweite Koppelwelle (6) auf dem zweiten Wellenstrang (22) über ein neuntes Lager (49) in der Getriebeabdeckung (29) und über ein zehntes Lager (50) im Mittelsteg (27) oder in der Motorenabdeckung (28) gelagert ist,
- sich die dritte Koppelwelle (7) über ein elftes Lager (51) auf der zweiten Koppelwelle (6) und über ein zwölftes Lager (52) im Mittelsteg (27) abstützt,
- sich die erste Koppelwelle (5) über ein dreizehntes (53) Lager auf der dritten Koppelwelle (7) und über ein vierzehntes Lager (54) auf der zweiten Koppelwelle (6) abstützt,
- ein fünfzehntes Lager (55) axiale Kräfte zwischen der dritten Koppelwelle (7) und dem Mittelsteg (27) überträgt,
- und ein sechzehntes Lager (56) axiale Kräfte zwischen der ersten Koppelwelle (5) und der dritten Koppelwelle (7) überträgt.

13. Antriebssystem (10) nach Anspruch 8 oder mindestens einem der Ansprüche 9 bis 12, soweit rückbezogen auf Anspruch 8, **dadurch gekennzeichnet, dass** zwischen dem ersten Lager (41) und dem vierten Lager (44) ein Freilauf (40) zwischen der Antriebswelle (1) und der Abtriebswelle (2) sitzt, der ein Schnellerdrehen der Antriebswelle (1) gegenüber der Abtriebswelle (2) verhindert.

14. Antriebssystem (10) nach mindestens einem der Ansprüche 1 bis 13, **dadurch gekennzeichnet, dass** an und auf der ersten Rotorwelle (3) ein erster Resolver (57) mit Sensor und Geberrad für die Messung einer Winkelposition und einer Drehzahl sitzt und/oder dass an und auf der zweiten Rotorwelle (4) ein zweiter Resolver (58) mit Sensor und Geberrad für die Messung einer Winkelposition und einer Drehzahl sitzt und/oder dass ein Drehzahlsensor (59) an und auf der Antriebswelle sitzt und/oder dass ein Beschleunigungssensor und/oder ein Neigungssensor (24) auf dem Getriebegehäuse (25) sitzt.

15. Motorisch unterstütztes Fahrrad mit einem Antriebssystem nach einem der Ansprüche 1 bis 14.

## Claims

1. A drive system (10), having
- a transmission housing (25),
- an input shaft (1),
- an output shaft (2),
- a multistage superposition transmission (15) via which the input shaft (1) and the output shaft (2) are connected to a first rotor shaft (3) of a first motor (11) and to a second rotor shaft (4) of a second motor (12),
- a power controller (8) via which the two motors (11, 12) are coupled to form a continuously variable actuating mechanism, and
- an energy accumulator (9) to which the two motors (11, 12) are connected,
wherein the multistage superposition transmission (15) has a planetary gear stage (16) with a sungear (17), a ring gear (18) and a planet carrier (19) with a plurality of planet gears (20), wherein
- the input shaft (1), the output shaft (2) and the second motor (12) with its second rotor shaft (4) are arranged coaxially on a first shaft train (21),
- the multistage superposition transmission (15) with the sungear (17), the ring gear (18) and the planet carrier (19) is configured only as a three-shaft planetary gear stage, and
- the first motor (11) with its first rotor shaft (3) is arranged on a third shaft train (23) which is situated parallel to the first shaft train (21) and to a second shaft train (22),
**characterized in that**
the three-shaft planetary gear stage is arranged on a second shaft train (22) which is arranged parallel to the first shaft train (21), and the energy accumulator (9) is also provided for accumulating brake energy when braking power flows into the drive system (10) at the output shaft (2).

2. The drive system (10) as claimed in claim 1, **characterized in that**
- the input shaft (1) on the first shaft train (21) is connected via a first spur gear stage (31) to a first coupling shaft (5) on the second shaft train (22),
- the output shaft (2) on the first shaft train (21) is connected via a second spur gear stage (32) to a second coupling shaft (6) on the second shaft train (22),
- the second rotor shaft (4) of the second motor (12) on the first shaft train (21) is connected via a third spur gear stage (33) to a third coupling shaft (7) on the second shaft train (22), the third coupling shaft (7) is connected to the sungear (17),
- and the first rotor shaft (3) of the first motor (11) on the third shaft train (23) is connected via a fourth spur gear stage (34) to the ring gear (18) on the second shaft train (22).

3. The drive system (10) as claimed in claim 1 or 2, **characterized in that**,
- on the second shaft train (22), the first coupling shaft (5) is connected to the planet carrier (19) and the second coupling shaft (6) is connected to the ring gear (18) of the planetary gear stage (16), or
- on the second shaft train (22), the first coupling shaft (5) is connected to the ring gear (18) and the second coupling shaft (6) is connected to the planet carrier (19) of the planetary gear stage (16).

4. The drive system (10) as claimed in at least one of claims 1 to 3, **characterized in that**
- the second spur gear stage (32) is situated in a first arrangement plane (35),
- the planetary gear stage (16) and the fourth spur gear stage (34) are situated in a second arrangement plane (36) which is situated parallel to the first arrangement plane (35) offset in an axial direction (30) which points into the transmission housing (25) from an output, which projects from the transmission housing (25), of the output shaft (2),
- the first spur gear stage (31) is situated in a third arrangement plane (37) which is likewise situated offset in the axial direction (30) with respect to the second arrangement plane (36),
- the third spur gear stage (33) is situated in a fourth arrangement plane (38) which is likewise situated offset in the axial direction (30) with respect to the third arrangement plane (37),
- and the two motors (11 and 12) are situated in a fifth arrangement plane (39) which is likewise situated offset in the axial direction (30) with respect to the fourth arrangement plane (38).

5. The drive system (10) as claimed in at least one of claims 1 to 4, **characterized in that** the gear of the fourth spur gear stage (34) on the second shaft train (22) has a larger pitch circle radius than the ring gear (18) of the three-shaft planetary gear stage (16).

6. The drive system (10) as claimed in at least one of claims 1 to 5, **characterized in that** the gear of the first spur gear stage (31) on the first coupling shaft (5) has a larger pitch circle radius than the sungear (17) of the third coupling shaft (7).

7. The drive system (10) as claimed in at least one of claims 1 to 6, **characterized in that** the transmission housing (25) has a main housing (26) with a central web (27), a motor covering (28) connected to the main housing (27), and a transmission covering (29) connected to the main housing (26).

8. The drive system (10) as claimed in claims 4 and 7, **characterized in that** the motor covering (28) is provided on one side of the transmission housing (25) on the fifth arrangement plane (39), and the transmission covering (29) is provided on one side of the transmission housing (25) on the first arrangement plane (35) through which the output shaft (2) projects out of the transmission housing (25).

9. The drive system (10) as claimed in claim 7 or 8, **characterized in that**
- the input shaft (1) is supported via a first bearing (41) in the output shaft (2) and via a second bearing (42) in the motor covering (28),
- the input shaft (1) projects on both sides out of the transmission housing (25),
- and the output shaft (2) is supported via a third bearing (43) in the transmission covering (29) and via a fourth bearing (44) on the input shaft (1).

10. The drive system (10) as claimed in at least one of claims 7 to 9, **characterized in that** the first rotor shaft (3) is supported via a fifth bearing (45) in the transmission covering (29) and via a sixth bearing (46) in the central web or in the motor covering (28).

11. The drive system (10) as claimed in at least one of claims 7 to 10, **characterized in that** the second rotor shaft (4) is mounted via a seventh bearing (47) on the drive shaft (1) or in the central web (27) and via an eighth bearing (48) on the input shaft (1) or in the motor covering (28).

12. The drive system (10) as claimed in claim 2 and at least one of claims 7 to 11, **characterized in that**
- the second coupling shaft (6) on the second shaft train (22) is mounted via a ninth bearing (49) in the transmission covering (29) and via a tenth bearing (50) in the central web (27) or in the motor covering (28),
- the third coupling shaft (7) is supported via an eleventh bearing (51) on the second coupling shaft (6) and via a twelfth bearing (52) in the central web (27),
- the first coupling shaft (5) is supported via a thirteenth bearing (53) on the third coupling shaft (7) and via a fourteenth bearing (54) on the second coupling shaft (6),
- a fifteenth bearing (55) transmits axial forces between the third coupling shaft (7) and the central web (27),
- and a sixteenth bearing (56) transmits axial forces between the first coupling shaft (5) and the third coupling shaft (7).

13. The drive system (10) as claimed in claim 8 or at least one of claims 9 to 12 if referring back to claim 8, **characterized in that** between the first bearing (41) and the second bearing (44) freewheel (40) is arranged between the input shaft (1) and the output shaft (2) that prevents the input shaft (1) from rotating quicker than the output shaft (2).

14. The drive system (10) as claimed in at least one of claims 1 to 13, **characterized in that** a first resolver (57) with sensor and encoder wheel for measuring an angular position and a rotational speed is seated on the first rotor shaft (3), and/or **in that** a second resolver (58) with sensor and encoder wheel for measuring an angular position and a rotational speed is seated on the second rotor shaft (4), and/or **in that** a rotational speed sensor (59) is seated on the input shaft, and/or **in that** an acceleration sensor and/or an inclination sensor (24) is seated on the transmission housing (25).

15. A motor-assisted bicycle having a drive system as claimed in one of claims 1 to 14.

## Revendications

1. Système d'entraînement (10), avec
- un boîtier de transmission (25),
- un arbre d'entraînement (1),
- un arbre de sortie (2),
- un réducteur différentiel (15) à plusieurs étages, par le biais duquel l'arbre de transmission (1) et l'arbre de sortie (2) sont reliés à un premier arbre de rotor (3) d'un premier moteur (11) et à un second arbre de rotor (4) d'un second moteur (12),
- une commande de puissance (8), par le biais de laquelle les deux moteurs (11, 12) sont couplés pour former un mécanisme de réglage continu, et
- un accumulateur d'énergie (9), auquel les deux moteurs (11, 12) sont reliés, dans lequel le réducteur différentiel (15) à plusieurs étages présente un étage de roue planétaire (16) avec une roue solaire (17), une couronne (18) et un porte-roues planétaires (19) avec plusieurs roues planétaires (20),
dans lequel
- l'arbre d'entraînement (1), l'arbre de sortie (2) et le second moteur (12) avec son second arbre de rotor (4) sont agencés coaxialement sur un premier brin d'arbre (21),
- le réducteur différentiel (15) à plusieurs étages avec la roue solaire (17), la couronne (18) et le porte-roues planétaires (19) est réalisé seulement en tant qu'un étage de roue planétaire à trois arbres, et
- le premier moteur (11) avec son premier arbre de rotor (3) est agencé sur un troisième brin d'arbre (23) qui se trouve parallèle au premier brin d'arbre (21) et à un deuxième brin d'arbre (22),
**caractérisé en ce que**
- l'étage de roue planétaire à trois arbres est agencé sur le deuxième brin d'arbre (22) qui se trouve parallèle au premier brin d'arbre (21), et l'accumulateur d'énergie (9) est également prévu pour le stockage de l'énergie de freinage lorsque, à l'arbre de sortie (2), de la puissance de freinage circule vers le système d'entraînement (10).

2. Système d'entraînement (10) selon la revendication 1, **caractérisé en ce que**
- l'arbre d'entraînement (1) est en liaison sur le premier brin d'arbre (21) par le biais d'un premier étage de roue avant (31) avec un premier arbre de couplage (5) sur le deuxième brin d'arbre (22),
- l'arbre de sortie (2) est en liaison sur le premier brin d'arbre (21) par le biais d'un deuxième étage de roue avant (32) avec un deuxième arbre de couplage (6) sur le deuxième brin d'arbre (22),
- le second arbre de rotor (4) du second moteur (12) est en liaison sur le premier brin d'arbre (21) par le biais d'un troisième étage de roue avant (33) avec un troisième arbre de couplage (7) sur le deuxième brin d'arbre (22), lequel est relié à la roue solaire (17),
- et le premier arbre de rotor (3) du premier moteur (11) est en liaison sur le troisième brin d'arbre (23) par le biais d'un quatrième étage de roue avant (34) avec la couronne (18) sur le deuxième brin d'arbre (22).

3. Système d'entraînement (10) selon la revendication 1 ou 2, **caractérisé en ce que**
- sur le deuxième brin d'arbre (22) le premier arbre de couplage (5) est relié au porte-roues planétaires (19) et le deuxième arbre de couplage (6) est relié à la couronne (18) de l'étage de roue planétaire (16), ou
- sur le deuxième brin d'arbre (22) le premier arbre de couplage (5) est relié à la couronne (18) et le deuxième arbre de couplage (6) est relié au porte-roues planétaires (19) de l'étage de roue planétaire (16).

4. Système d'entraînement (10) selon au moins l'une des revendications 1 à 3, **caractérisé en ce que**
- le deuxième étage de roue avant (32) se trouve dans un premier plan d'agencement (35),
- l'étage de roue planétaire (16) et le quatrième étage de roue avant (34) se trouvent dans un deuxième plan d'agencement (36) qui se trouve décalé parallèlement au premier plan d'agencement (35) dans le sens axial (30) qui est dirigé d'une sortie dépassant du boîtier de transmission (25) de l'arbre de sortie (2) dans le boîtier de transmission (25),
- le premier étage de roue avant (31) se trouve dans un troisième plan d'agencement (37) qui se trouve décalé aussi dans le sens axial (30) par rapport au deuxième plan d'agencement (36),
- le troisième étage de roue avant (33) se trouve dans un quatrième plan d'agencement (38) qui se trouve décalé aussi dans le sens axial (30) par rapport au troisième plan d'agencement (37),
- et les deux moteurs (11 et 12) se trouvent dans un cinquième plan d'agencement (39) qui se trouve décalé aussi dans le sens axial (30) par rapport au quatrième plan d'agencement (38).

5. Système d'entraînement (10) selon au moins l'une des revendications 1 à 4, **caractérisé en ce que** la roue dentée du quatrième étage de roue avant (34) sur le deuxième brin d'arbre (22) présente un rayon de cercle de roulement supérieur à celui de la couronne (18) de l'étage de roue planétaire (16) à trois arbres.

6. Système d'entraînement (10) selon au moins l'une des revendications 1 à 5, **caractérisé en ce que** la roue dentée du premier étage de roue avant (31) sur le premier arbre de couplage (5) présente un rayon de cercle de roulement supérieur à celui de la roue solaire (17) du troisième arbre de couplage (7).

7. Système d'entraînement (10) selon au moins l'une des revendications 1 à 6, **caractérisé en ce que** le boîtier de transmission (25) présente un boîtier principal (26) avec une nervure médiane (27), un capot de moteur (28) relié au boîtier principal (27) et un capot de transmission (29) relié au boîtier principal (26).

8. Système d'entraînement (10) selon les revendications 4 et 7, **caractérisé en ce que** le capot de moteur (28) est prévu sur un côté du boîtier de transmission (25) au niveau du cinquième plan d'agencement (39) et le capot de transmission (29) est prévu sur un côté du boîtier de transmission (25) au niveau du premier plan d'agencement (35), à travers lequel l'arbre de sortie (2) dépasse du boîtier de transmission (25).

9. Système d'entraînement (10) selon la revendication 7 ou 8, **caractérisé en ce que**
- l'arbre d'entraînement (1) s'appuie par le biais d'un premier palier (41) dans l'arbre de sortie (2) et par le biais d'un deuxième palier (42) dans le capot de moteur (28),
- l'arbre d'entraînement (1) dépasse au niveau des deux côtés du boîtier de transmission (25),
- et l'arbre de sortie (2) s'appuie par le biais d'un troisième palier (43) dans le capot de transmission (29) et par le biais d'un quatrième palier (44) sur l'arbre d'entraînement (1).

10. Système d'entraînement (10) selon au moins l'une des revendications 7 à 9, **caractérisé en ce que** le premier arbre de rotor (3) s'appuie par le biais d'un cinquième palier (45) dans le capot de transmission (29) et par le biais d'un sixième palier (46) dans la nervure médiane ou dans le capot de moteur (28).

11. Système d'entraînement (10) selon au moins l'une des revendications 7 à 10, **caractérisé en ce que** le second arbre de rotor (4) est logé par le biais d'un septième palier (47) sur l'arbre d'entraînement (1) ou dans la nervure médiane (27) et par le biais d'un huitième palier (48) sur l'arbre d'entraînement (1) ou dans le capot de moteur (28).

12. Système d'entraînement (10) selon la revendication 2 et au moins l'une des revendications 7 à 11, **caractérisé en ce que**
- le deuxième arbre de couplage (6) sur le deuxième brin d'arbre (22) est logé par le biais d'un neuvième palier (49) dans le capot de transmission (29) et par le biais d'un dixième palier (50) dans la nervure médiane (27) ou dans le capot de moteur (28),
- le troisième arbre de couplage (7) s'appuie par le biais d'un onzième palier (51) sur le deuxième arbre de couplage (6) et par le biais d'un douzième palier (52) dans la nervure médiane (27),
- le premier arbre de couplage (5) s'appuie par le biais d'un treizième palier (53) sur le troisième arbre de couplage (7) et par le biais d'un quatorzième palier (54) sur le deuxième arbre de couplage (6),
- un quinzième palier (55) transmet des forces axiales entre le troisième arbre de couplage (7) et la nervure médiane (27),
- et un seizième palier (56) transmet des forces axiales entre le premier arbre de couplage (5) et le troisième arbre de couplage (7).

13. Système d'entraînement (10) selon la revendication 8 ou au moins l'une des revendications 9 à 12, dans la mesure où elle se réfère à la revendication 8, **caractérisé en ce qu'**entre le premier palier (41) et le quatrième palier (44) une roue libre (40) loge entre l'arbre d'entraînement (1) et l'arbre de sortie (2), laquelle empêche une rotation plus rapide de l'arbre d'entraînement (1) par rapport à l'arbre de sortie (2).

14. Système d'entraînement (10) selon au moins l'une des revendications 1 à 13, **caractérisé en ce qu'**au niveau de et sur le premier arbre de rotor (3) un premier résolveur (57) loge avec un capteur et une roue phonique pour la mesure d'une position angulaire et d'une vitesse de rotation et/ou qu'au niveau de et sur le second arbre de rotor (4) un second résolveur (58) loge avec un capteur et une roue phonique pour la mesure d'une position angulaire et d'une vitesse de rotation et/ou qu'un capteur de vitesse de rotation (59) loge au niveau de et sur l'arbre d'entraînement et/ou qu'un capteur d'accélération et/ou un capteur d'inclinaison (24) loge sur le boîtier de transmission (25).

15. Bicyclette à assistance motorisée avec un système d'entraînement selon l'une des revendications 1 à 14.
